# EUROPEAN PATENT APPLICATION

(11) **EP 1 894 475 A2**
(43) Date of publication of application: **05.03.2008**
(21) Application number: 07019910.4
(22) Date of filing: 08.07.2004
(51) Int. Cl.: A23G 3/00, A23L 1/236, A23L 2/60, A23G 3/54, A23G 3/34

(54) **Sweetener compositions with a sweetness and taste profile comparable to HFCS 55**

(30) Priority: 14.07.2003 US 619151; 08.08.2003 US 637283; 08.04.2004 US 821003
(62) Divisional of application: 04740772.1
(71) Applicant: Nutrinova Nutrition Specialties & Food Ingredients GmbH, 65926 Frankfurt am Main (DE)
(72) Inventor: Rathjen, Susanne, 64297 Darmstadt (DE)

(57) **Abstract**

This invention relates to sweetening compositions used to produce foodstuffs with a sweetness and taste profile comparable to HFCS 55. The sweetener compositions generally include at least one carbohydrate sweetener selected from the group consisting of HFCS 55, HFCS 42 and sucrose along with an effective amount of a high intensity sweetener composition. The high intensity sweetener composition includes acesulfame K and one of either aspartame, sucralose or neotame. Foodstuffs formed using the reduced-calorie sweetener compositions of the invention exhibit a taste profile comparable to HFCS 55 and a calorie reduction of 50 % or more.

## Description

The present invention relates to sweetener compositions. More particularly, the present invention relates to sweetener compositions used to produce reduced calorie beverages having a sweetness and taste profile comparable to beverages incorporating high fructose corn syrup alone.

Carbohydrates have historically been used to impart sweetness to a variety of foodstuffs, such as beverages and the like. Unfortunately, carbohydrate sweeteners are highly caloric. Conventional carbohydrate sweeteners include sucrose, derived from sugar cane or sugar beets, and high fructose corn syrups ("HFCSs").

HFCSs are common liquid sweeteners formed from isomerized corn syrups derived from the isomerization of glucose in the syrup to fructose by the enzyme isomerase. HFCSs are typically available as either HFCS 42, containing 42 % fructose, or HFCS 55, containing 55 % fructose. The taste profiles of these two HFCSs differ from each other. The taste profiles of both these HFCSs differ from sugar, as well. Nevertheless, HFCSs are commonly incorporated into a wide variety of foods and beverages instead of sugar, primarily for cost reasons. HFCS 42 is more economical in comparison to HFCS 55. However, amongst HFCSs, it is well accepted that the taste quality, i.e. sweetness level, of HFCS 55 is superior to HFCS 42. Consequently, HFCS 55 is regarded as a sweetness standard in certain regions and product categories.

In contrast to carbohydrate sweeteners, high intensity sweeteners are synthetic or natural substances which have either no calories or minimal, e.g. virtually no, calories. As the name suggests, high intensity sweeteners exhibit a sweetness potency several times higher than sugar. High intensity sweeteners or blends of high intensity sweeteners are used in food and beverages to achieve a sweet taste without adding substantial calories to the products. High intensity sweeteners commonly employed include acesulfame K, alitame, aspartame, cyclamate, lo han go, neohesperidine dihydrochalcone, neotame, saccharin, stevioside and sucralose.

The ongoing debate on obesity in developed countries and the growing health consciousness of consumers has lead to an increasing demand for reduced calorie beverages that exhibit a taste profile similar to beverages sweetened with carbohydrate sweeteners. More specifically, there is a demand for beverages that have more than a 50 % reduction in calories compared to products fully sweetened with carbohydrates. Consumers prefer that such reduced calorie beverages further exhibit an overall taste profile similar to the sweetness standard HFCS 55.

However, no high-intensity sweetener alone matches the taste profile of HFCS 55 completely. They differ in characteristics such as sweetness profile, side taste and off-taste characteristics. Proper blending of different high intensity sweeteners is known to overcome part of the taste limitations of single high-intensity sweeteners, however, even mixtures of high intensity sweeteners can not match the overall taste sensation of HFCS 55. In particular, even if a more HFCS 55-like sweetness profile is achieved in products with high-intensity sweeteners only, they still can be distinguished sensorically from HFCS 55 by lack of mouthfeel and reduced flavor characteristics.

Fry ("Sugar Replacement in Non-diet Soft Drinks", Food Technology International Europe, 83-86, 1995) describes 30 and 50 % calorie reduction in cola and lemonades using combinations of either (a) glucose syrup and aspartame or (b) low-fructose syrups and aspartame. Using a consumer panel it was shown that none of these sweetening systems exhibit a taste profile similar to sucrose. The glucose syrup/aspartame and low-fructose syrup/aspartame mixtures showed statistical significant differences in sweetness, acidity, sweet aftertaste, bitter aftertaste, length of aftertaste, liking for aftertaste, mouthfeel, odour liking, flavour liking and overall liking.

Simon (Simon et al., "Combinations of Glucose Syrups and Intense Sweeteners, Application in Calorie Reduced Soft Drinks" in 'FIE. Food Ingredients Europe, Conference proceedings, Paris 27, 28, 29 September 1989', Maarssen, Netherlands; Expoconsult Publishers, 330-333, 1989) recommends using 3 % glucose syrup and different combinations of high-intensity sweeteners, which are calculated from a computer model. The high-intensity sweeteners investigated by Simon include acesulfame K, aspartame, cyclamate and saccharin. Simon does not give any sensory description of the resulting taste profiles compared to HFCS 55.

Lotz and Meyer (Lotz, A., Meyer, E., "Sweeteners in Beverages - New Developments", Food Marketing & Technology, 4-9, 1994) recommend recipes using sugar and sweetener blends, stating that these combinations create a "nicely balanced sweetness." Intense sweeteners investigated include acesulfame K, aspartame, cyclamate, saccharin, NHDC, and thaumatin. However, Lotz and Meyer similarly do not provide any sensory results compared to HFCS 55.

McNeil product information broadly discloses that blends of 50 % HFCS plus Sucralose in Colas are not significantly different in triangle tests from Colas sweetened with 100 % HFCS only. Neither exact recipes nor the type of HFCS quality is given.

Neotame artificial sweetener product information discloses that blends of 75 % HFCS plus neotame in cola flavored beverages have a taste and flavor profile relatively similar to 100 % HFCS only. The Neotame product information does not note the type of HFCS.

Accordingly, a need remains in the art for sweetener compositions that provide at least a 50 % reduction in calories and whose resulting foodstuffs sufficiently match the taste profile of foodstuffs containing HFCS 55 alone. Advantageously, such compositions incorporate HFCS 42.

The present invention provides sweetener compositions used to produce foodstuffs exhibiting a taste profile comparable to HFCS 55 that further advantageously provide a calorie reduction of 50 % or more. For the sake of clarity, as used herein, the instant sweetener compositions may also be referred to as "reduced calorie sweetener compositions," although it is understood that the calorie reduction is actually exhibited within the foodstuff incorporating the instant sweetener compositions.

The sweetener compositions of the present invention generally includes (i) at least one carbohydrate sweetener and (ii) a high intensity sweetener composition formed from a mixture of acesulfame K and one of either aspartame, sucralose or neotame.

Neither HFCS 42 or sucrose alone, nor blends of acesulfame K and neotame or acesulfame K and aspartame or acesulfame K and sucralose alone match the taste profile of HFCS 55 as such completely. Surprisingly, it was observed that foodstuffs containing (i) at least one carbohydrate sweetener, e.g. either HFCS 55 and/or HFCS 42 and/or sucrose, along with (ii) a high intensity sweetener composition formed from acesulfame K and one of either aspartame, sucralose or neotame have a taste profile which is not significantly different from HFCS 55, with a significant caloric reduction. In advantageous embodiments, the instant sweetener compositions provide significantly more than a 50 % calorie reduction.
Figure 1 is a sensory profile of beverages containing two comparative sweetener compositions;
Figure 2 is a sensory profile of further beverages containing comparative sweetener compositions;
Figure 3 is a sensory profile of beverages containing an advantageous reduced calorie sweetener composition in accordance with the invention in comparison to HFCS 55;
Figure 4 is a sensory profile of beverages containing another advantageous reduced calorie sweetener composition in accordance with the invention in comparison to HFCS 55;
Figure 5 is a sensory profile of beverages containing another advantageous reduced calorie sweetener composition in accordance with the invention in comparison to HFCS 55;
Figure 6 is a sensory profile of beverages containing another advantageous reduced calorie sweetener composition in accordance with the invention in comparison to HFCS 55; and
Figure 7 is a sensory profile of a further beverage containing a comparative sweetener composition in comparison to HFCS 55.

The instant reduced-calorie sweetener compositions generally include at least one carbohydrate sweetener and a high intensity sweetener composition formed from a mixture of acesulfame K and one of either aspartame, sucralose or neotame.

For the sake of clarity, sweetener composition embodiments incorporating acesulfame K and either aspartame or sucralose within their high intensity sweetener composition may be referred to hereinafter as "aspartame/sucralose-based sweeteners" or "aspartame/sucralose-based compositions" or the like. Similarly, for the sake of clarity, sweetener embodiments incorporating neotame within their high intensity sweetener composition may be referred to hereinafter as "neotame-based sweeteners" or "neotame-based compositions" or the like. Unless specifically stated otherwise, however, discussions hereinafter directed to the instant sweetener compositions are intended to include both the aspartame/sucralose-based sweeteners and the neotame-based sweeteners.

Exemplary carbohydrate sweeteners that may be included within the instant reduced-calorie sweetener compositions include HFCS 42, HFCS 55, sucrose, and mixtures thereof. HFCS 42, HFCS 55 and sucrose are commercially available from numerous sources, including Cargill Foods, USA.

At least one carbohydrate sweetener is included within the reduced-calorie sweetener compositions. In particularly advantageous neotame-based sweeteners, the carbohydrate sweetener can be a mixture, particularly a mixture of HFCS 42 and sucrose. In such advantageous embodiments, the HFCS 42 and sucrose may be present within the carbohydrate sweetener within exemplary weight ratios of 20 : 80 to 80 : 20. In especially beneficial aspects of such embodiments, the carbohydrate sweetener is a mixture of substantially equal amounts of HFCS 42 and sucrose, i.e. the HFCS 42 and sucrose are present in approximately a 50 : 50 weight ratio.

The carbohydrate sweetener may advantageously be present within the reduced-calorie sweetener composition in any effective amount.

For example, the carbohydrate sweetener is advantageously present within the aspartame/sucralose-based compositions in non-limiting exemplary amounts ranging from about 96.2 to 99.7 weight percent, based on the weight of the sweetener composition ("bowsc"), such as amounts ranging from about 97.7 to 99.7 weight percent (bowsc), and more specifically from about 98.5 to 99.6 weight percent (bowsc). In particularly advantageous embodiments, the carbohydrate sweetener is present within aspartame/sucralose-based sweetener embodiments in an amount of about 98.9 to 99.1 weight percent (bowsc).

The carbohydrate sweetener is advantageously present within the neotame-based sweetener compositions in non-limiting exemplary amounts ranging from about 95.2 to 99.9 weight percent (bowsc), such as amounts ranging from about 96.8 to 99.9 weight percent (bowsc), and more specifically from about 97.4 to 99.9 weight percent (bowsc), particularly from about 98.3 to 99.8 weight percent (bowsc). In particularly advantageous embodiments, the carbohydrate sweetener is present within neotame-based sweetener embodiments in an amount of about 99.54 weight percent (bowsc).

As noted above, the instant reduced-calorie sweetener compositions further include a high intensity sweetener composition.

In the aspartame/sucralose-based sweeteners, the high intensity sweetener composition is a mixture of acesulfame K and one of either aspartame or sucralose. Acesulfame K, also referred to as acesulfame potassium, is commercially available as SUNNETT^{®} sweetener from Nutrinova Nutrition Specialties & Food Ingredients GmbH, Germany. Aspartame is commercially available from numerous sources, including the Nutrasweet Company, USA (as NUTRASWEET^{®} artificial sweetener). Sucralose is commercially available as SPLENDA^{®} artificial sweetener from McNeil Nutritionals, USA.

The aspartame/sucralose-based embodiments may contain a wide range of acesulfame K to either asparatame or sucralose weight ratios. Non-limiting exemplary weight ratios for the acesulfame K to aspartame within the high intensity sweetener composition are 20 : 80 to 70 : 30 (acesulfame K : aspartame, weight to weight ratio, "w/w"), advantageously 25 : 75 to 60 : 40 w/w and most advantageously 30 : 70 to 55 : 45 w/w. Non-limiting exemplary weight ratios for the acesulfame K to sucralose within the high intensity sweetener composition are 10 : 90 to 80 : 20 (acesulfame K : sucralose, weight to weight ratio, "w/w"), advantageously 30 : 70 to 75 : 25 w/w and most advantageously 40 : 60 to 70 : 30 w/w.

The high intensity sweetener composition may be present within the aspartame/sucralose-based compositions in any effective amount. The high intensity sweetener composition is advantageously present within the aspartame/sucralose-based compositions in non-limiting exemplary amounts ranging from about 0.3 to 3.8 weight percent (bowsc), such as amounts ranging from about 0.3 to 2.3 weight percent (bowsc), more specifically from about 0.4 to 1.5 weight percent (bowsc).

In the neotame-based sweeteners, the high intensity sweetener composition is a mixture of acesulfame K and neotame. Neotame is (N-[N-(3,3-dimethylbutyl)-L-α-aspartyl]-L-phenylalanine 1-methyl ester), which is commercially available as neotame from Nutrasweet Company, USA.

The neotame-based sweeteners typically contain a greater amount of acesulfame K than neotame. In particular, acesulfame K is typically present in at least a 10:1 weight ratio in comparison to neotame. Non-limiting exemplary weight ratios for the acesulfame K to neotame within the high intensity sweetener composition are 10 : 1 to 450 : 1 (acesulfame K: neotame, weight to weight ratio, "w/w"), advantageously 10 : 1 to 350 : 1 w/w and most advantageously 15 : 1 to 150 :1 w/w.

The high intensity sweetener composition may be present within the neotame-based compositions in any effective amount. The high intensity sweetener composition is advantageously present within the neotame-based compositions in non-limiting exemplary amounts ranging from about 0.1 to 4.8 weight percent (bowsc), such as amounts ranging from about 0.1 to 3.2 weight percent (bowsc), and more specifically from about 0.1 to 2.6 weight percent (bowsc) or from about 0.2 to 1.7 weight percent (bowsc), such as 0.45 weight percent (bowsc).

In addition to the carbohydrate sweetener and the high intensity sweetener composition, the reduced-calorie sweetener compositions of the invention may also contain minor amounts of commonly used additives such as flavors, bulking agents, weighting agents and the like. Such commonly used additives may be present in non-limiting exemplary amounts of up to about 10 weight percent, based on the weight of the foodstuff ("bowf"), preferably up to 5 about weight percent (bowf).

The reduced-calorie sweetener compositions of the invention may be incorporated into any foodstuff, including beverages, dairy products, desserts, chewing gums, and the like. Reduced-calorie sweetener compositions in accordance with the invention advantageously result in significantly more than a 50 % calorie reduction in comparison to sugar sweetened foodstuffs.

In advantageous embodiments, the reduced-calorie sweetener compositions are included within beverages. Exemplary beverages include all alcoholic beverages and non-alcoholic beverages, either carbonated or non-carbonated, in concentrated form or ready-to drink. Beverages in accordance with the invention may be water based, fruit-juice based, milk- or milk-derivative based. In advantageous embodiments of the invention, the beverages are water based and/or fruit juice based. In especially beneficial aspects of the invention, the beverages are non-alcoholic beverages (water based and/or fruit-juice based), either carbonated or non carbonated, in concentrated form or ready-to-drink.

The reduced-calorie sweetener compositions may be present within the foodstuff in any effective amount.

The aspartame/sucralose-based compositions can be advantageously present within the foodstuff in non-limiting exemplary amounts ranging from about 1.0 to 5.0 weight percent, based on the weight of the foodstuff (bowf), such as from about 1.5 to 5.0 weight percent (bowf). In particularly advantageous embodiments, the aspartame/sucralose-based compositions are present in an amount of about 2.0 to 4.0 weight percent (bowf). This is in contrast to conventional sweeteners, typically included in beverages in amounts of about 10.0 weight percent (bowf).

Considered differently, an exemplary conventional carbohydrate sweetened beverage may contain about 100 g of carbohydrate sweeteners per 1000 ml of beverage. In contrast, an exemplary 1000 ml beverage incorporating the instant asparatame/sucralose-based compositions would typically include from about 10.00 to 50.00 g of the reduced-calorie sweetener composition to achieve a taste profile comparable to that of such conventionally sweetened beverages with 100 g of carbohydrate sweetener alone. An exemplary 1000 ml beverage incorporating the instant aspartame/sucralose-based compositions would thus typically contain carbohydrate sweetener in amounts ranging from about from about 10 to 50 grams, such as from about 15 to 50 grams, particularly from about 20 to 40.0 grams. An exemplary 1000 ml beverage incorporating the instant aspartame/sucralose-based compositions would typically also include the high intensity sweetener composition in amounts ranging from about 0.002 to 0.05 grams, advantageously from about 0.005 to 0.03 grams, and particularly advantageously from about 0.007 to 0.02 grams, such as an amount of about 0.009 to 0.015 grams.

Conventional beverages may, of course, contain substantially more or less than the 10 wt.-% carbohydrate sweetener noted above. The appropriate amount of the instant aspartame/sucralose-based compositions used to provide a taste profile within a beverage of the invention that is comparable to a given conventional beverage sweetened with a specific weight percentage of carbohydrate sweetener alone would thus vary. Generally, the appropriate amount of the aspartame/sucralose-based compositions needed to provide a taste profile within a beverage that is comparable to the taste profile of a beverage sweetened with carbohydrate sweeteners alone would be expected to vary proportionally, based on the ranges provided in conjunction with the exemplary 10 wt.-% carbohydrate sweetened 1000 ml beverage discussed above. For example, an exemplary 1000 ml beverage would typically include from about 20.00 to 100.00 g of the aspartame/sucralose-based composition to achieve a taste profile comparable to that of 1000 ml beverages containing 200 g of carbohydrate sweetener alone.

The neotame-based compositions are advantageously present within the foodstuff in non-limiting exemplary amounts ranging from about 1.0 to 4.0 weight percent (bowf), such as from about 1.5 to 4.0 weight percent (bowf), particularly from about 2.0 to 3.5 weight percent (bowf), and especially from about 3.0 to 3.5 weight percent (bowf). In particularly advantageous embodiments, the neotame-based compositions are present within foodstuffs in an amount of about 3.5 weight percent (bowf). Again, this is in contrast to conventional carbohydrate sweeteners, typically included in beverages in amounts of about 10.0 weight percent (bowf).

As noted above, an exemplary conventional carbohydrate sweetened beverage may typically contain about 100 g of carbohydrate sweeteners per 1000 ml of beverages. In contrast, an exemplary 1000 ml beverage would typically include from about 10.00 to 40.00 g of the neotame-based sweetener composition to provide a taste profile comparable to a conventional 1000 ml beverage containing 100 g of carbohydrate sweetener alone. An exemplary 1000 ml beverage incorporating the instant neotame-based compositions would thus typically contain carbohydrate sweetener in amounts ranging from about from about 10 to 40 grams, such as from about 15 to 40 grams, particularly from about 20 to 35 grams, and especially from about 30 to 35 grams. An exemplary 1000 ml beverage incorporating neotame-based compositions would typically also include the high intensity sweetener composition in amounts ranging from about 0.04 to 0.5 grams, advantageously from about 0.06 to 0.40 grams, and particularly advantageously from about 0.07 to 0.35 grams.

As noted above, conventional beverages may contain substantially more or less than the exemplary 10 wt.-% carbohydrate sweetener discussed above. The appropriate amount of the instant neotame-based compositions used to provide a taste profile within a beverage of the invention that is comparable to a given conventional beverage sweetened with a specific weight percentage of carbohydrate sweetener alone would thus vary. Generally, the appropriate amount of the neotame-based compositions needed to provide a taste profile comparable to the taste profile of a given beverage sweetened with conventional carbohydrate sweeteners alone would be expected to vary proportionally, based on the ranges provided in conjunction with the exemplary 10 wt.-% carbohydrate sweetened 1000 ml beverage discussed above. For example, an exemplary 1000 ml beverage incorporating the instant neotame-based compositions would typically include from about 20.00 to 80.00 g of the reduced-calorie sweetener composition to achieve a taste profile comparable to that of 1000 ml beverages containing 200 g of carbohydrate sweetener alone.

Accordingly, the sweetener compositions of the invention result in beverages that typically contain about 10 to 40% of the calories of comparable beverages including HFCS 55 alone; such as about 15 to 40% of the calories of comparable beverages including HFCS 55 alone; and particularly from about 20 to 35% of the calories of comparable beverages including HFCS 55 alone.

Reduced-calorie sweetener compositions in accordance with the invention are formed by simply mixing the carbohydrate sweetener and the high intensity sweetener composition together. The mixing process employed may be any suitable mixing technique known in the food industry. The reduced-calorie sweetener compositions may then be incorporated directly into foodstuffs, using techniques known in the art.

The invention is further illustrated by the following, non-limiting, examples.

### EXAMPLES

### Testing Methodology for Reduced-Calorie Sweetener Compositions

A sensory analysis was carried out for soft drinks made with conventional carbohydrate sweeteners in comparison to soft drinks incorporating the instant reduced-calorie sweetener composition. All sweetening systems employed were sensorically adjusted to 10 % (weight) sucrose equivalence. A sensory panel of experts, especially trained to evaluate sweet products, from an independent, experienced sensorial-testing institute established the beverage flavor-specific attributes for the quantitative descriptive analysis. Quantitative assessments were undertaken by each of 12 panelists in individual tasting booths using a 0-100 scale. The order of presentation of samples was balanced across the panelists. Each panelist completed 3 replicates of these quantitative rating assessments.

Additional triangle tests were carried out with selected sweetening systems in order to find out if differences described by the trained panelists can be detected by consumers. These tests were carried out with 24 subjects according to the methodology described in DIN ISO 4120 (1995-01).

### Comparative Example 1: Beverage containing 10.15 wt.-% (bowf) HFCS 42 in comparison to beverage containing 10 wt.-% (bowf) sucrose

The sensory profile of a 10.15 weight percent (bowf) HFCS 42 sweetened lemon-lime product was compared to a product sweetened with 10 weight percent (bowf) sucrose. The beverage system that was used as a basis for the product was 0.65 g/l of commercially available lemon-lime flavor (Sensient 1013981, commercially available from Sensient Flavours and Fragrances, USA), 2.5 g/l citric acid monohydrate, 0.15 g/l sodium benzoate and 6.3 g/l CO₂.

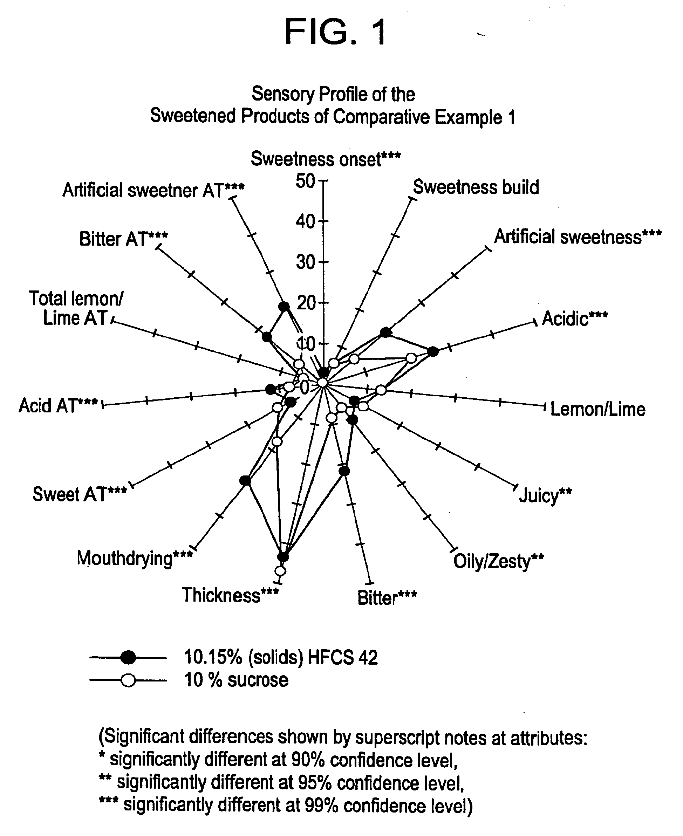

The results of the 15 attribute taste profile comparison are shown in the spider diagram in Figure 1. Spider diagrams, such as the diagram illustrated in Figure 1, are multi- parameter graphs. Spider diagrams are particularly useful in describing the overall taste and sweetness profile of food products. Spider diagrams allow the numerous attributes of a given food product, e.g. its acidity or sweet after taste ("AT"), to be illustrated within a single diagram. The intensity of each of these attributes is illustrated as well. The spider diagrams provided herein are the result of a multi test person sensory panel trial, as noted above.

The size of the plotted polygon, i.e. the integral area within the interior of the polygon, does not necessarily have any particular meaning per se. However, the shape of the polygon, i.e. the respective integral area, characterizes the taste profile as such. Thus, the more the polygon of two different types of food products, e.g. two different beverages, show a similar shape or form, the more likely the taste profiles can be described as being not significantly different from each other.

Consequently, as shown in Figure 1, statistically significant sensory differences exist between lemon-lime carbonated beverages sweetened with 10.15 weight percent (bowf) HFCS 42 versus 10 weight percent (bowf) sucrose. More particularly, the taste profiles for these two beverages are shown to differ at a 99 % confidence level for sweetness onset, artificial sweetness, acidic taste, bitterness, thickness, mouthdrying, sweet after taste ("AT"), acid AT, bitter AT, and artificial sweetener AT.

### Comparative Example 2: Beverage containing 10.15 wt.-% (bowf) HFCS 55 in comparison to a beverage containing 10 wt.-% (bowf) sucrose

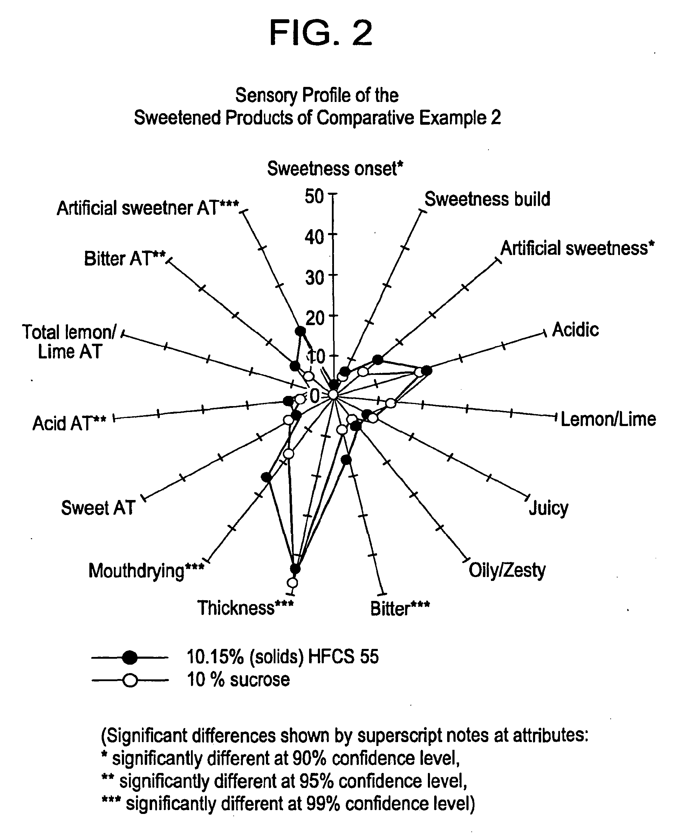

The sensory profile of a 10.15 weight percent (bowf) HFCS 55 sweetened lemon-lime product was compared to a product sweetened with 10 weight percent (bowf) sucrose. The products were based on the beverage system described in Comparative Example 1. The results are shown in Figure 2.

As shown in Figure 2, statistically significant sensory differences between the two products were observed. In specific, the beverages were significantly different at a 99 % confidence level for bitterness, thickness, mouthdrying, artificial sweetener AT.

These differences can be regarded as being relevant to consumers. As proof of this difference, a subsequent triangle taste test was performed on consumers using the products of Comparative Example 2. Out of 24 consumers 14 picked the right sample, which results in a highly significant difference (alpha = 0.01), indicating that the differences between theses two beverages is readily detectable by consumers.

### Example 1: 10.15wt.-% (bowf) HFCS 55 vs. 2 wt.-% (bowf) HFCS 42 and acesulfame K/aspartame in a lemon-lime carbonated beverage

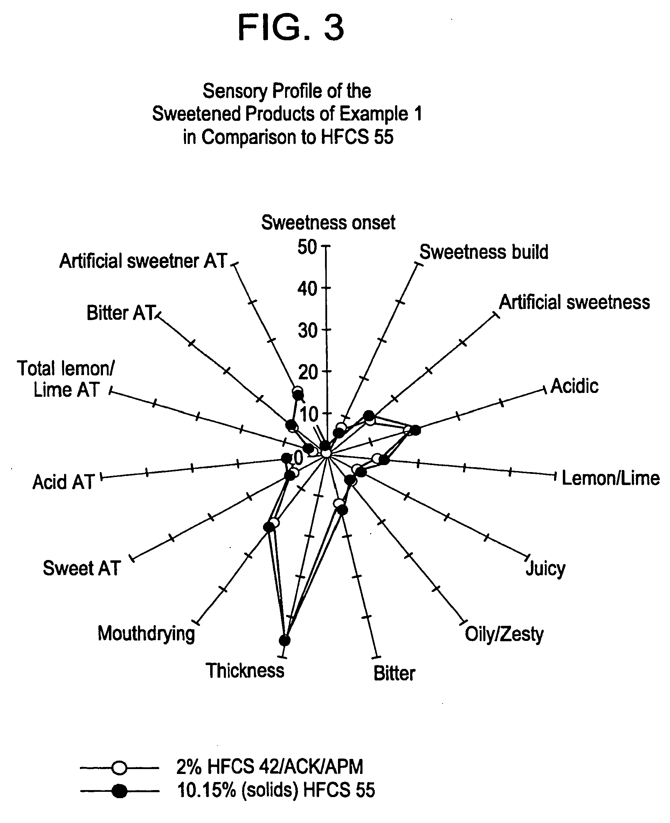

The sensory profiles of a 10.15 wt.-% (bowf) HFCS 55 sweetened product was compared to a product sweetened with a reduced-calorie sweetener composition formed from (a) 2wt.-% (bowf) HFCS 42 carbohydrate sweetener and (b) a high intensity sweetener composition formed from the combination of 0.115 g/l acesulfame K and 0.115 g/l aspartame. The products were based on the beverage system described in Comparative Example 1. The results are shown in Figure 3. No statistically significant sensory differences between the two products were observed (alpha = 0.01).

### Example 2: 10.15 wt.-% (bowf) HFCS 55 vs. 2 wt.-% (bowf) HFCS 42 and acesulfame K/Sucralose in a lemon-lime carbonated beverage

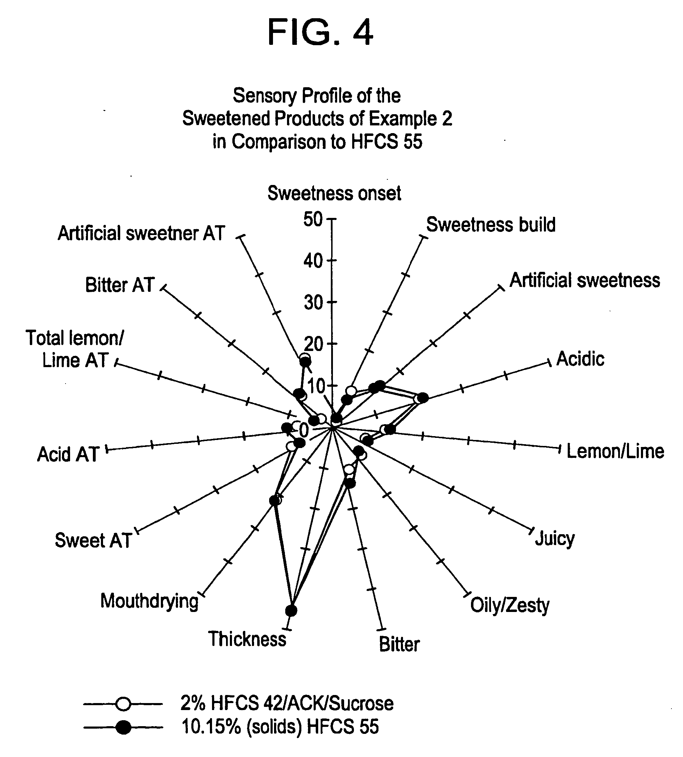

The sensory profiles of a 10.15 wt.-% (bowf) HFCS 55 sweetened product was compared to a product sweetened with reduced-calorie sweetener composition formed from (a) 2 wt.-% (bowf) HFCS 42 carbohydrate sweetener and (b) a high intensity sweetener composition formed from the combination of 0.090 g/l acesulfame K and 0.097 g/l Sucralose. The products were based on the beverage system described in Comparative Example 1. The results are shown in Figure 4. No statistically significant sensory differences between the two products were observed (alpha = 0.01).

### Example 3: 10 wt.-% (solids) HFCS 55 vs. 2 wt.-% (bowf) sucrose plus acesulfame K/Sucralose in a lemon-lime carbonated beverage

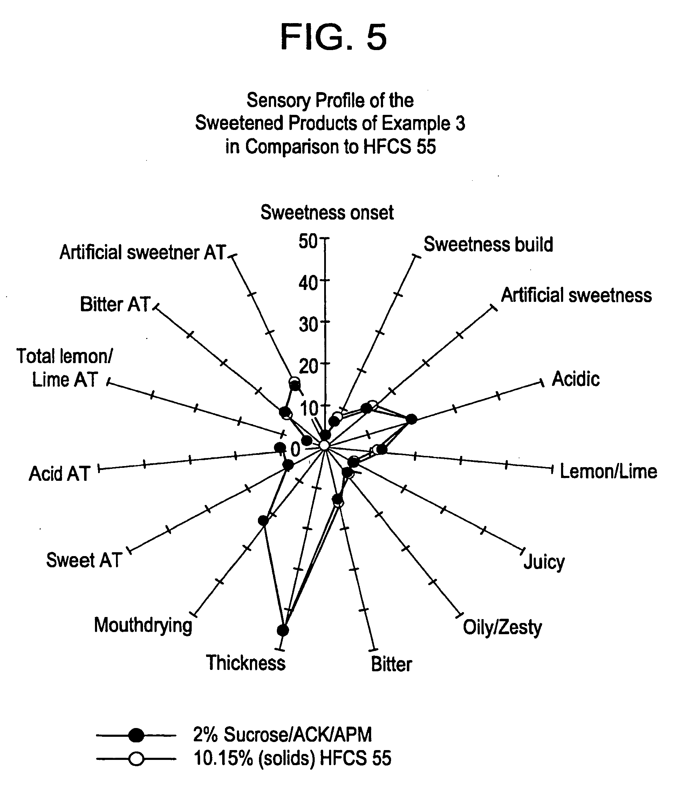

The sensory profiles of a 10.15 wt.-% (bowf) HFCS 55 sweetened product was compared to a product sweetened with a reduced-calorie sweetener composition formed from (a) 2 wt.-% (bowf) sucralose carbohydrate sweetener and (b) a high intensity sweetener composition formed from the combination of 0.115 g/l acesulfame K and 0.115 g/l aspartame. The products were based on the beverage system described in Comparative Example 1. The results are shown in Figure 5. No statistically significant sensory differences between the two products were observed (alpha = 0.01).

### Example 4: Beverage containing 10.15 wt.-% (bowf) HFCS 55 vs. 3.5 wt.-% carbohydrate mixture plus acesulfame K/neotame in a lemon-lime carbonated beverage

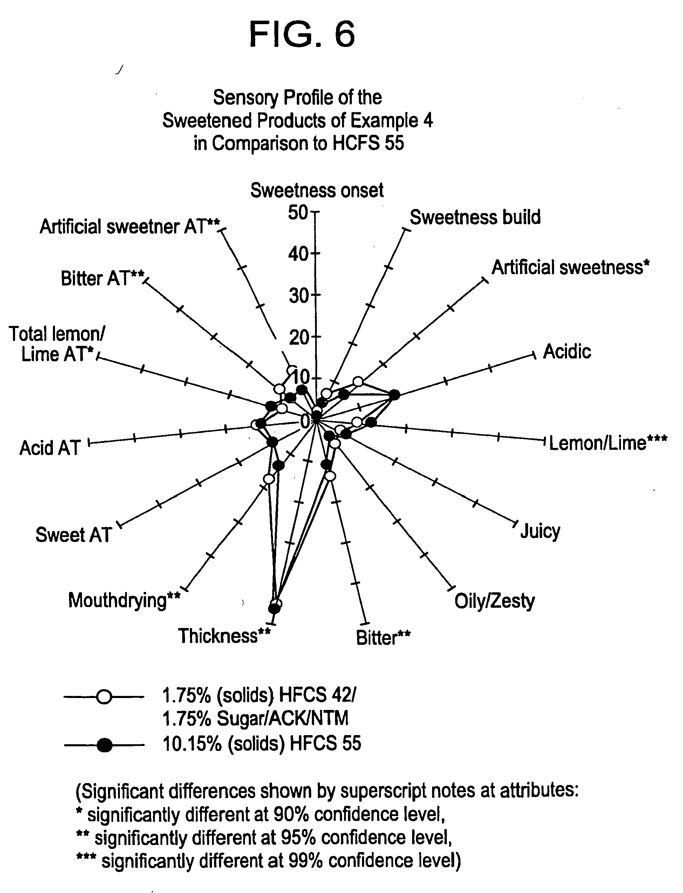

The sensory profile of a 10.15 weight percent (bowf) HFCS 55 sweetened product was compared to a product sweetened with a reduced-calorie sweetener composition formed from a combination of (a) a carbohydrate sweetener mixture of 1.75 weight percent (bowf) HFCS 42 and 1.75 weight percent (bowf) sucrose and (b) an intense sweetener mixture of 0.158 g/l acesulfame K and 0.00345 g/l neotame. The products were based on the beverage system described in Comparative Example 1. The results are shown in Figure 6.

As shown in Figure 6, only small statistically significant sensory differences between the products in accordance with the invention in comparison to HFCS 55 sweetened beverages were observed, i.e. the values differed for the most part only at a 95 % confidence interval.

These differences can be regarded as being not relevant to consumers. The only difference at the 99 % confidence interval was the lemon/lime attribute, considered irrelevant to consumers.

To determine if any relevance did exist, a subsequent triangle test was performed using the two beverages. Out of 24 consumers, only 11 picked the right sample, which results in no significant difference (alpha = 0.14) between the beverages. Consequently, the differences between these two beverages were not detectable by consumers.

These results indicate that beverages sweetened with the neotame-based sweetener compositions exhibited a comparable taste profile to that of beverages sweetened with HFCS 55 alone. More particularly, the foregoing results indicate that the taste profile of beverages sweetened with the neotame-based sweeteners are statistically equivalent to, i.e. are substantially statistically identical to, the taste profile of beverages sweetened with HFCS 55 alone. This result is altogether unexpected.

### Comparative Example 3: Beverage containing 10.15 wt.-% (bowf) HFCS 55 in comparison to a beverage containing a mixture of 5 wt.-% (bowf) sucrose and Neotame

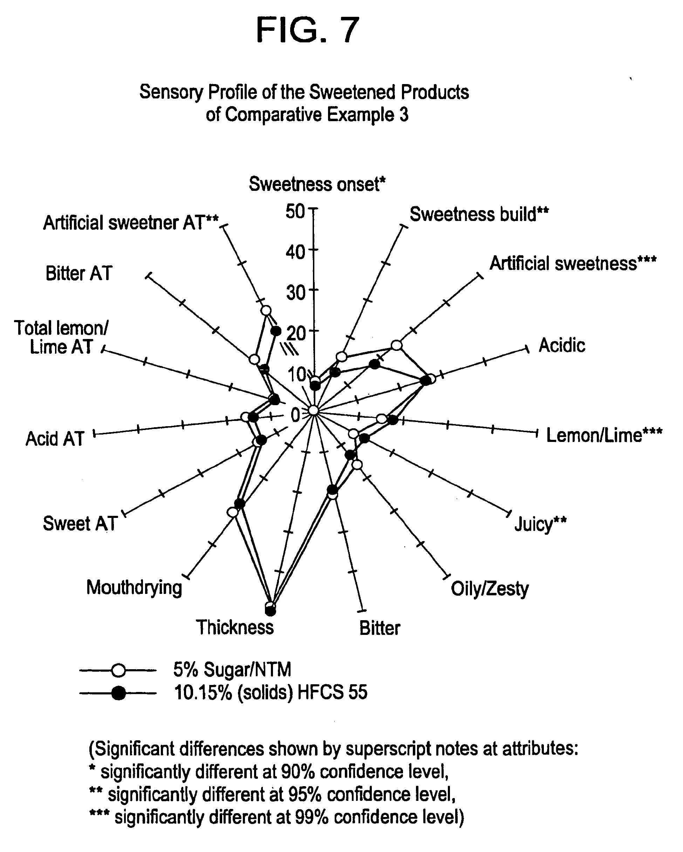

The sensory profile of a product sweetened with 10.15 weight percent (bowf) HFCS 55 was compared to the sensory profile of a product sweetened with 5 weight percent (bowf) of sucrose plus Neotame. The results of the comparison are shown in Figure 7.

As shown in Figure 7, statistically significant sensory differences between the two products were observed for both artificial sweetness and lemon/lime.

These differences can be regarded as being relevant to consumers. As proof of this difference, a subsequent triangle taste test was performed on consumers using the products of Comparative Example 3. Out of 24 consumers 13 picked the right sample, which results in a significant difference (alpha = 0.028), indicating that the differences between theses two beverages is readily detectable by consumers.

Additional advantages, features and modifications will readily occur to those skilled in the art. Therefore, the invention in its broader aspects is not limited to the specific details, and representative examples, shown and described herein. Accordingly, various modifications may be made without departing from the spirit or scope of the general inventive concept as defined by the appended claims and their equivalents.

As used herein and in the following claims, articles such as "the", "a" and "an" can connote the singular or plural.

## Claims

1. A sweetener composition comprising
(i) at least one carbohydrate sweetener selected from the group consisting of HFCS 55, HFCS 42 and sucrose; and
(ii) an effective amount of a high intensity sweetener composition comprising acesulfame K and neotame, said acesulfame K present in at least a 10:1 weight ratio in comparison to said neotame.

2. A sweetener composition according to Claim 1, wherein the carbohydrate sweetener is present within the sweetener composition in an amount ranging from about 95.2 to 99.9 weight percent.

3. A sweetener composition according to Claim 1 or 2, wherein the carbohydrate sweetener is a mixture of HFCS 42 and sucrose.

4. A sweetener composition according to one of Claims 1 to 3, wherein the HFCS 42 and sucrose are present in approximately equal amounts.

5. A sweetener composition according to one of Claims 1 to 4, wherein the high intensity sweetener composition is present in the sweetener composition in an amount ranging from about 0.1 to 4.8 weight percent.

6. A sweetener composition according to one of Claims 1 to 5, wherein the weight ratio of acesulfame K to neotame is 10 :1 to 450 :1.

7. Foodstuff incorporating the sweetener composition according to Claim 1.

8. A foodstuff according to Claim 7, wherein the sweetener composition is present within the foodstuff in an amount ranging from about 1.0 to 4.0 weight percent, bowf.

9. Process for producing a reduced calorie foodstuff, which process comprises incorporating a sweetener composition into a foodstuff in an amount ranging from about 1.0 to 4.0 weight percent (bowf), said sweetener composition comprising
(i) at least one carbohydrate sweetener selected from the group consisting of HFCS 55, HFCS 42 and sucrose; and
(ii) a high intensity sweetener composition comprising acesulfame K and neotame, said acesulfame K present in at least a 10:1 ratio in comparison to said neotame, said foodstuff exhibiting a taste profile comparable to HFCS 55.

10. A process according to Claim 9, wherein said carbohydrate sweetener is present within the sweetener composition in an amount ranging from about 95.2 to 99.9 weight percent, bowsc.

11. A process according to Claim 9 or 10, wherein the high intensity sweetener composition is present within the sweetener composition in an amount ranging from about 0.10 to 4.8 weight percent, bowsc.

12. A process according to one of Claims 9 to 11, wherein the weight ratio of acesulfame K to neotame is 10:1 to 450:1 (w:w).
